(19) **Europäisches Patentamt / European Patent Office / Office européen des brevets**

(11) **EP 4 631 923 A1**

(12) **EUROPEAN PATENT APPLICATION**
published in accordance with Art. 153(4) EPC

(43) Date of publication:
15.10.2025 Bulletin 2025/42

(51) International Patent Classification (IPC):
*C03C 27/12* (2006.01)  *B32B 7/12* (2006.01)
*B32B 27/00* (2006.01)  *B32B 27/22* (2006.01)
*B32B 27/28* (2006.01)  *B32B 27/30* (2006.01)
*B60J 1/00* (2006.01)

(21) Application number: 23900626.5

(22) Date of filing: 04.12.2023

(52) Cooperative Patent Classification (CPC):
B32B 7/12; B32B 17/00; B32B 27/00; B32B 27/22;
B32B 27/28; B32B 27/30; B60J 1/00

(86) International application number:
PCT/JP2023/043345

(87) International publication number:
WO 2024/122511 (13.06.2024 Gazette 2024/24)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 05.12.2022 JP 2022194495
24.07.2023 JP 2023120134

(71) Applicant: SEKISUI CHEMICAL CO., LTD.
Osaka-shi
Osaka
530-8565 (JP)

(72) Inventors:
• SHIMIZU, Kazuki
Koka-shi, Shiga 528-8585 (JP)
• NOMURA, Keisuke
Koka-shi, Shiga 528-8585 (JP)
• NOHARA, Atsushi
Koka-shi, Shiga 528-8585 (JP)
• TAKAHASHI, Yuuma
Dallas, Texas 75234 (US)

(74) Representative: Ter Meer Steinmeister & Partner
Patentanwälte mbB
Nymphenburger Straße 4
80335 München (DE)

(54) **THERMOPLASTIC RESIN FILM, LAMINATE, AND OPTICAL LAMINATE**

(57) The present invention relates to a thermoplastic resin film having a single-layer structure or a multilayer structure, wherein the thermoplastic resin film includes at least a thermoplastic resin layer (A) including a thermoplastic resin, when the thermoplastic resin film has a multilayer structure, at least one outermost layer is the thermoplastic resin layer (A), the thermoplastic resin layer (A) has an amount of change in thickness of 80 $\mu$m or more when compressed according to a compressive creep test conducted under predetermined conditions, and the thermoplastic resin layer (A) has a storage modulus at 90°C of $1.4 \times 10^5$ Pa or more. A laminated body (50) according to the present invention includes a thermoplastic resin film (10) according to the present invention and a functional layer (40) different from the thermoplastic resin film (10). An optical laminated body (1B) according to the present invention includes a first transparent material substrate (20), a second transparent material substrate (30), and the thermoplastic resin film (10) according to the present invention or the laminated body (50) according to the present invention. According to the present invention, it is possible to provide a thermoplastic resin film having good film formability that, even without going through an autoclave process under high-temperature and high-pressure conditions, can suppress residual air during compression bonding and suppress the formation of air bubbles at a peripheral portion during compression bonding, a laminated body including the thermoplastic resin film, and an optical laminated body including the thermoplastic resin film or the laminated body.

EP 4 631 923 A1

# Fig. 2

## Description

Technical Field

The present invention relates to a thermoplastic resin film, a laminated body including the thermoplastic resin film, and an optical laminated body including the thermoplastic resin film or the laminated body.

Background Art

Conventionally, laminated glass, in which two glass sheets are integrated with an interlayer film interposed between them, is widely known. Interlayer films are often formed from plasticized polyvinyl acetal, which is a polyvinyl acetal resin mixed with a plasticizer. Laminated glass does not easily cause glass shards to scatter even if damaged by an external impact, thus providing safety, and is thus widely used for the window glass in vehicles such as automobiles, aircraft, buildings, or the like.

Laminated glass is generally made by arranging an interlayer film between two glass sheets, performing a preliminary degassing process, and then heating and pressurizing in an autoclave (ACV) process at a temperature of 130°C or higher and 140°C or lower and a pressure of about 1.3 MPa to compression bond the glass and the interlayer film.

Further, various studies and enhancements have been made in relation to interlayer films for laminated glass. PTL 1 discloses a laminated glass interlayer film having an amount of change in thickness when subjected to a compressive creep test that is within a certain range.

In recent years, laminated glass is sometimes required to have various functions, and for example, a functional film such as a light control body may be arranged between the two glass sheets. When incorporating a functional film such as a light control body into laminated glass, it is known to arrange the interlayer film between the functional film and each glass sheet to integrate the two glass sheets and the functional film with the interlayer film interposed between them (for example, see PTL 2).

Citation List

Patent Literature

PTL 1: WO 2021/117596 A1
PTL 2: WO 2019/066042 A1

Summary of Invention

Technical Problem

However, functional films such as light control bodies are sensitive to heat and pressure, and thus there is often the problem that if the glass sheets, interlayer film, and functional film are compression bonded under conventional high-temperature and high-pressure conditions in an autoclave, the functionality of the functional film is lost. Another problem is that heating to high temperatures is required, which releases a large amount of carbon dioxide. On the other hand, if the compression bonding is performed without an autoclave process or by autoclaving at low temperatures, air may remain between the interlayer film and the glass sheets or between the interlayer film and the functional film during compression bonding, causing the transparency of laminated glass obtained by the compression bonding to deteriorate. In addition, there is also the problem that if the interlayer film is made flexible to suppress residual air, air bubbles may form at the peripheral portion of the interlayer film during compression bonding, resulting in poor appearance of the laminated glass and poor film formability.

Therefore, an object of the present invention is to provide a thermoplastic resin film having good film formability that, even without going through an autoclave process under high-temperature and high-pressure conditions, can suppress residual air during compression bonding and suppress the formation of air bubbles at a peripheral portion during compression bonding, a laminated body including the thermoplastic resin film, and an optical laminated body including the thermoplastic resin film or the laminated body.

Solution to Problem

As a result of extensive studies, the present inventors have found that the above-described problems can be solved by using a thermoplastic resin film that uses a thermoplastic resin layer prepared such that the thermoplastic resin layer has an amount of change in thickness of 80 $\mu$m or more when compressed according to a predetermined compressive creep test and has a storage modulus at 90°C of $1.4 \times 10^5$ Pa or more, thereby completing the present invention as described below. That is, the present invention provides the following [1] to [25].

[1] A thermoplastic resin film having a single-layer structure or a multilayer structure, wherein

the thermoplastic resin film includes at least a thermoplastic resin layer (A) including a thermoplastic resin, in a case where the thermoplastic resin film has a multilayer structure, at least one outermost layer is the thermoplastic resin layer (A),
the thermoplastic resin layer (A) has an amount of change in thickness of 80 $\mu$m or more when compressed according to a compressive creep test conducted under the conditions described below, and
the thermoplastic resin layer (A) has a storage modulus at 90°C of $1.4 \times 10^5$ Pa or more. (Compressive creep test conditions)
A test sample having a diameter of 8 mm and a thickness of 700 to 900 $\mu$m produced from the thermoplastic resin layer (A) is compressed for 30 minutes under a load of 410 g and a temperature of 30°C, a thickness (T1) of the test sample is then measured, the temperature is then increased from 30°C to 90°C at a heating rate of 6°C/min while maintaining the load of 410 g, the test sample is compressed for 5 minutes under the load of 410 g and temperature of 90°C, a thickness (T2) of the test sample A is then measured, and an absolute value of a difference between the thickness (T1) and the thickness (T2) of the test sample is taken as the amount of change in thickness.

[2] The thermoplastic resin film according to the above [1], wherein the amount of change in thickness is 400 $\mu$m or less.

[3] The thermoplastic resin film according to the above [1] or [2], wherein the thermoplastic resin layer (A) has a complex viscosity at 200°C of 2000 Pa·s or more.

[4] The thermoplastic resin film according to any one of the above [1] to [3], wherein the thermoplastic resin layer (A) has a storage modulus at 90°C of $1.0 \times 10^7$ Pa or less.

[5] The thermoplastic resin film according to any one of the above [1] to [4], wherein the thermoplastic resin layer (A) includes a polyvinyl acetal resin and a plasticizer.

[6] The thermoplastic resin film according to the above [5], wherein

the polyvinyl acetal resin is produced by a method including a mixing process of mixing a polyvinyl alcohol and an aldehyde, and an aging process of aging the mixture obtained in the mixing process, and
the aging temperature in the aging process is 30°C or higher and 65°C or lower.

[7] The thermoplastic resin film according to the above [6], wherein the aging temperature is 40°C or higher and 57°C or lower.

[8] The thermoplastic resin film according to any one of the above [5] to [7], wherein

the polyvinyl acetal resin is a polyvinyl acetal resin obtained by acetalizing a polyvinyl alcohol with an aldehyde, and
the polyvinyl alcohol has an average degree of polymerization of 200 or more and 5000 or less.

[9] The thermoplastic resin film according to any one of the above [5] to [8], wherein
the polyvinyl acetal resin has a weight-average molecular weight (Mw) of 220,000 or more and 310,000 or less.

[10] The thermoplastic resin film according to any one of the above [5] to [9], wherein the plasticizer has a content of 30 parts by mass or more and 50 parts by mass or less with respect to 100 parts by mass of the polyvinyl acetal resin.

[11] The thermoplastic resin film according to any one of the above [5] to [10], wherein the plasticizer has a content of 10 parts by mass or more and 100 parts by mass or less with respect to 100 parts by mass of a thermoplastic resin (a) included in the thermoplastic resin layer (A).

[12] The thermoplastic resin film according to any one of the above [5] to [11], wherein the plasticizer is at least one selected from the group consisting of an organic ester plasticizer, an organic phosphate ester plasticizer, an organic phosphite ester plasticizer, a polyalkylene glycol plasticizer, a polyoxyalkylene ether plasticizer, and an alcohol plasticizer.

[13] The thermoplastic resin film according to the above [12], wherein the plasticizer is at least one plasticizer selected from the group consisting of triethylene glycol-di-2-ethylhexanoate (3GO), polypropylene glycol (PPG), and polyoxypropylene diglyceryl ether.

[14] The thermoplastic resin film according to any one of the above [1] to [13], wherein the thermoplastic resin layer (A) has a thickness of 100 $\mu$m or more and 2000 $\mu$m or less.

[15] A laminated body including:

the thermoplastic resin film according to any one of the above [1] to [14]; and
a functional layer different from the thermoplastic resin film.

[16] The laminated body according to the above [15], wherein the functional layer is at least one film selected from the group consisting of a light control film, a display element film, a polarizing film, a retardation film, and an antireflection film.

[17] The laminated body according to the above [15] or [16], wherein the functional layer includes an electronic component.

[18] The laminated body according to any one of the above [15] to [17], wherein the functional layer is a solar cell element.

[19] An optical laminated body including:

a first transparent material substrate;
a second transparent material substrate; and
the thermoplastic resin film according to any one of the above [1] to [14] arranged between the first and second transparent material substrates.

[20] An optical laminated body including:

a first transparent material substrate;
a second transparent material substrate; and
the laminated body according to any one of the above [15] to [19] arranged between the first and second transparent material substrates.

[21] A method for producing an optical laminated body according to the above [19] or [20], wherein the optical laminated body is obtained by arranging at least a thermoplastic resin film or a laminated body between the first transparent material substrate and the second transparent material substrate, and bonding together the at least a thermoplastic resin film or laminated body and the first transparent material substrate and second transparent material substrate by compression bonding.

[22] The method for producing an optical laminated body according to the above [21], wherein

the thermoplastic resin film contains a polyvinyl acetal resin,
the polyvinyl acetal resin is produced by a method including a mixing process of mixing the above polyvinyl alcohol and the above aldehyde and an aging process of aging the mixture obtained in the mixing process, and
the aging temperature in the aging process is 30°C or higher and 65°C or lower.

[23] The method for producing an optical laminated body according to the above [22], wherein the aging temperature is 40°C or higher and 57°C or lower.

[24] The method for producing an optical laminated body according to any one of the above [21] to [23], wherein the optical laminated body is obtained by compression bonding at a temperature of 110°C or lower.

[25] The method for producing an optical laminated body according to any one of the above [21] to [24], wherein the optical laminated body is obtained by compression bonding under a pressure condition of 1.2 MPa or less.

Advantageous Effects of Invention

According to the present invention, it is possible to provide a thermoplastic resin film having good film formability that, even without going through an autoclave process under high-temperature and high-pressure conditions, can suppress residual air during compression bonding and suppress the formation of air bubbles at a peripheral portion during compression bonding, a laminated body including the thermoplastic resin film, and an optical laminated body including the thermoplastic resin film or the laminated body.

Brief Description of Drawings

[Fig. 1] Fig. 1 is a diagram showing a layer structure of optical laminated body in a first embodiment of the present invention.

[Fig. 2] Fig. 2 is a diagram showing a layer structure of optical laminated body in a second embodiment of the present invention.

Description of Embodiments

<Thermoplastic resin film>

The thermoplastic resin film according to the present invention has a single-layer structure or a multilayer structure, and includes at least a thermoplastic resin layer (A) that includes a thermoplastic resin. When the thermoplastic resin film has a multilayer structure, at least one outermost layer is the thermoplastic resin layer (A). Further, the thermoplastic resin layer (A) has an amount of change in thickness of 80 $\mu$m or more when compressed according to a compressive creep test conducted under the conditions described below, and has a storage modulus at 90°C of $1.4 \times 10^5$ Pa or more.

(Compressive creep test)

Firstly, a test sample having a diameter of 8 mm and a thickness of 700 to 900 $\mu$m (for example, 800 $\mu$m) is produced from the thermoplastic resin layer (A). Next, the test sample is compressed for 5 minutes under a load of 410 g and a temperature of 30°C, and then a thickness (T1) of the test sample is measured. The temperature is then increased from 30°C to 90°C at a heating rate of 6°C/min while maintaining the load of 410 g, the test sample is compressed for 5 minutes under the load of 410 g and temperature of 90°C, a thickness (T2) of the test sample is then measured, and an absolute value of a difference between the thickness (T1) and the thickness (T2) of the test sample is taken as amount of change in thickness.

When the thickness of the thermoplastic resin layer (A) is less than 700 $\mu$m, the test sample may be produced by stacking two or more thermoplastic resin films, compression bonding the stack using heat pressing as appropriate, adjusting the thickness with a press or the like to between 700 and 900 $\mu$m, and then cutting, for example, into a cylindrical shape having a diameter of 8 mm.

In addition, when the thickness of the thermoplastic resin layer (A) is more than 900 $\mu$m, the test sample may be produced by adjusting the thickness to between 700 and 900 $\mu$m using hot pressing as necessary, and then cutting, for example, into a cylindrical shape having a diameter of 8 mm.

When the thermoplastic resin film has a multilayer structure, the thermoplastic resin layer (A) is removed by peeling the thermoplastic resin layer (A) from other layers.

Further, if the surface of the test sample has unevenness such as embossments, the test sample may be produced, for example, by heat-pressing the test sample as appropriate so that the surface becomes flat, and then cutting into a cylindrical shape having a diameter of 8 mm.

If the thermoplastic resin layer (A) has the above-described amount of change in thickness of less than 80 $\mu$m, when an optical laminated body is produced by compression bonding a thermoplastic resin film onto a transparent material substrate or functional layer using a low-temperature autoclave or means other than an autoclave, there may be residual air between the thermoplastic resin film and the transparent material substrate or functional layer, resulting in a deterioration in the transparency of the optical laminated body.

From this viewpoint, the amount of change in thickness of the thermoplastic resin layer (A) is preferably 90 $\mu$m or more, more preferably 120 $\mu$m or more, and further preferably 150 $\mu$m or more. When the amount of change in thickness increases in this way, the amount of air remaining during compression bonding can be further reduced, and the transparency of the optical laminated body can be enhanced.

The amount of change in thickness of the thermoplastic resin layer (A) is, for example, 500 $\mu$m or less, preferably 400 $\mu$m or less, more preferably 200 $\mu$m or less, and further preferably 180 $\mu$m or less. By setting the amount of change in thickness to a certain value or less, it is possible to further suppress the formation of air bubbles at the peripheral portion of the thermoplastic resin film during compression bonding.

[Storage modulus at 90°C]

The thermoplastic resin layer (A) has a storage modulus at 90°C of $1.4 \times 10^5$ Pa or more. If the storage modulus of the thermoplastic resin layer (A) is less than $1.4 \times 10^5$, air bubbles may form in the peripheral portion of the thermoplastic resin film during compression bonding, which may result in appearance defects being formed. In addition, flexibility increases too much, making transportation while applying tension difficult, it is difficult to produce a thermoplastic resin film by extrusion molding, and film formability may deteriorate.

From this viewpoint, the thermoplastic resin layer (A) has the storage modulus at 90°C of preferably $1.5 \times 10^5$ Pa or more, more preferably $1.8 \times 10^5$ Pa or more, and still further preferably $2.4 \times 10^5$ Pa or more.

The storage modulus at 90°C is preferably equal to or less than a certain value in order to ensure a certain degree of flexibility, for example, $1.0 \times 10^7$ Pa or less, preferably $1.0 \times 10^6$ Pa or less, and more preferably $3.0 \times 10^5$ Pa or less.

It is noted that the "storage modulus" refers to shear storage modulus, and can be measured under the measurement conditions described in the Examples described later.

The amount of change in thickness and the storage modulus at 90°C can be adjusted as appropriate by adjusting the thermoplastic resin used for the thermoplastic resin layer (A) (hereinafter, the thermoplastic resin contained in the thermoplastic resin layer (A) may be referred to as "thermoplastic resin (a)"). For example, the amount of change in thickness and the storage modulus at 90°C can be adjusted by adjusting the molecular weight of the thermoplastic resin (a). Specifically, as the molecular weight decreases, the amount of change in thickness tends to increase, while the storage modulus at 90°C tends to decrease.

Further, when using a polyvinyl acetal resin, the amount of change in thickness and the storage modulus at 90°C can also be adjusted by adjusting the production conditions when producing the polyvinyl acetal resin. Specifically, as described below, the amount of change in thickness and the storage modulus at 90°C can be adjusted by adjusting the aging conditions in the aging process performed when producing the polyvinyl acetal resin.

Moreover, the amount of change in thickness and the storage modulus at 90°C can also be adjusted by adjusting, for example, the amount and type of the plasticizer contained in the thermoplastic resin layer (A). For example, when the amount of plasticizer is increased, the amount of change in thickness tends to increase, while the storage modulus at 90°C tends to decrease. In addition, if an ether-based plasticizer such as a polyoxyalkylene ether plasticizer or a polyoxyalkylene ether plasticizer is used as the plasticizer, the amount of change in thickness tends to increase while preventing a decrease in the storage modulus 90°C.

[Complex viscosity]

The thermoplastic resin layer (A) in the thermoplastic resin film according to the present invention has a complex viscosity at 200°C of preferably 2000 Pa·s or more. When the complex viscosity at 200°C is 2000 Pa·s or more, it tends to be easier to apply a certain tension when forming the film, film formability tends to be enhanced, and it tends to be easier to perform molding such as extrusion molding. From this viewpoint, the thermoplastic resin layer (A) in the thermoplastic resin film according to the present invention has a complex viscosity at 200°C of more preferably 3000 Pa·s or more, further preferably 4000 Pa·s or more, and still further preferably 5000 Pa·s or more. Further, from the viewpoint of being able to properly extrude the thermoplastic resin while preventing the viscosity from becoming too high, the thermoplastic resin layer (A) in the thermoplastic resin film according to the present invention has a complex viscosity at 200°C of preferably 30000 Pa·s or less, more preferably 10000 Pa·s or less, and further preferably 7000 Pa·s or less.

The method for measuring the above-described complex viscosity is not particularly limited, but, for example, the complex viscosity can be measured by the following method. If the thermoplastic resin film has a single-layer structure, the measurement is carried out using the thermoplastic resin film as is. When the thermoplastic resin film has a multilayer structure, the thermoplastic resin layer (A) is removed by peeling the thermoplastic resin layer (A) from the other layers. 1 g of the thermoplastic resin layer (A) is placed in a mold (length 2 cm × width 2 cm × thickness 0.76 mm) arranged between two polyethylene terephthalate (PET) films, preliminarily heated at a temperature of 150°C and a press pressure of 0 kg/cm$^2$ for 10 minutes, and then press molded at 80 kg/cm$^2$ for 15 minutes. Then, the press-molded thermoplastic resin layer (A) is placed in a hand press machine preset to 20°C, and cooled by pressing at 10 MPa for 10 minutes. Next, one PET film is peeled off from the mold arranged between the two PET films, the peeled-off PET film is held in a constant temperature and humidity chamber (humidity 30% (±3%), temperature 23°C) for 24 hours, then the viscoelasticity is measured using an ARES-G2 manufactured by TA INSTRUMENTS in accordance with JIS K7244-10 (ISO 6721-10), and the complex viscosity is measured. A parallel plate with a diameter of 8 mm is used as a jig for measuring the viscoelasticity. Further, the viscoelasticity measurement is performed under conditions of a measurement temperature of 200°C, a frequency of 1 Hz, and a strain of 5%. The obtained complex viscosity is read as the value of the complex viscosity of the thermoplastic resin layer (A) at 200°C.

The complex viscosity of the thermoplastic resin layer (A) can be reduced by, for example, reducing the molecular weight of the thermoplastic resin (a) or increasing the content of the plasticizer contained in the thermoplastic resin layer (A).

Examples of the thermoplastic resin (a) used for the thermoplastic resin layer (A) of the present invention include a (meth)acrylic resin, a polyvinyl acetal resin, a polyvinyl alcohol resin (PVA), a polyurethane resin (PU), an ethylene-vinyl acetate copolymer resin (EVA), a saponified ethylene-vinyl acetate copolymer (EVOH), an ethylene-methacrylic acid copolymer resin, an ionomer resin, an isobutylene resin, a styrene-isoprene copolymer resin, and a styrene-butadiene copolymer resin. The thermoplastic resins may be used alone or in combination of two or more.

Among the above examples, from the viewpoint of achieving both moist heat resistance and impact resistance, the thermoplastic resin (a) is preferably a polyvinyl acetal resin, a polyurethane resin (PU), an ethylene-vinyl acetate copolymer resin (EVA), a saponified ethylene-vinyl acetate copolymer (EVOH), an ethylene-methacrylic acid copolymer resin, an ionomer resin, an isobutylene resin, a styrene-isoprene copolymer resin, or a styrene-butadiene copolymer resin. Further, among the above-described thermoplastic resins, a polyvinyl acetal resin is more preferred. By using a polyvinyl acetal resin, it is easier to achieve excellent impact resistance. In addition, it is easier to enhance adhesive strength to various types of resin material and inorganic glass. Hereinafter, the polyvinyl acetal resin used for the thermoplastic resin (a) will be described in detail.

(Polyvinyl acetal resin)

The polyvinyl acetal resin is not particularly limited as long as it is a polyvinyl acetal resin obtained by acetalizing polyvinyl alcohol (PVA) with an aldehyde.

The aldehyde is not particularly limited, but generally it is preferred to use an aldehyde having from 1 to 10 carbon atoms. Examples of the aldehyde having from 1 to 10 carbon atoms include, but are not particularly limited to, n-butyraldehyde, isobutyraldehyde, n-valeraldehyde, 2-ethylbutyraldehyde, n-hexylaldehyde, n-octylaldehyde, n-nonylaldehyde, n-decylaldehyde, formaldehyde, acetaldehyde, and benzaldehyde. These aldehydes may be used alone or in combination of two or more.

Among the above, n-butyraldehyde, n-hexylaldehyde, and n-valeraldehyde are preferred, and n-butyraldehyde is more preferred. Therefore, a polyvinyl butyral resin is suitable for the polyvinyl acetal resin.

The polyvinyl alcohol (PVA) can be obtained, for example, by saponifying a polyvinyl ester such as a polyvinyl acetate. The degree of saponification of the polyvinyl alcohol is generally 70 to 99.9 mol%.

The average degree of polymerization of the PVA is preferably 200 or more, more preferably 500 or more, further preferably 750 or more, and still further preferably 1000 or more. When the average degree of polymerization is equal to or higher than the above lower limit, the penetration resistance of optical laminated body is increased when used in optical laminated body. Further, the average degree of polymerization of the PVA is preferably 5000 or less, more preferably 4000 or less, further preferably 3500 or less, and still further preferably 2500 or less.

The average degree of polymerization of the polyvinyl alcohol is determined by a method in accordance with JIS K6726 "Testing method for polyvinyl alcohol." Further, when two or more types of polyvinyl alcohols are used as the raw material, the average degree of polymerization of the polyvinyl alcohol can be estimated by calculating the average degree of polymerization of each polyvinyl alcohol.

Two or more types of polyvinyl alcohols having different average degrees of polymerization may be used as the raw material for the polyvinyl acetal resin. In this case, it is preferred to produce the polyvinyl acetal resin based on the production method described below using a mixture of two or more types of polyvinyl alcohol as the raw material.

When using two or more types of polyvinyl alcohols, it is preferable to use, for example, a first polyvinyl alcohol having an average degree of polymerization of 1500 or more and a second polyvinyl alcohol having an average degree of polymerization of 1000 or less. By using two or more types of polyvinyl alcohols having different average degrees of polymerization, it is easier to increase the amount of change in thickness.

The average degree of polymerization of the first polyvinyl alcohol is preferably 1500 or more and 3500 or less, more preferably 1600 or more and 2500 or less, and further preferably 1600 or more and 2000 or less. Further, the average degree of polymerization of the second polyvinyl alcohol is preferably 200 or more and 1000 or less, more preferably 300 or more and 900 or less, and further preferably 400 or more and 850 or less.

When using the first and second polyvinyl alcohols, the blending ratio of the first polyvinyl alcohol and the second polyvinyl alcohol is not particularly limited, but the blending amount of the second polyvinyl alcohol with respect to the total amount of the first and second polyvinyl alcohols is preferably 1% by mass or more and 50% by mass or less, more preferably 2% by mass or more and 40% by mass or less, further preferably 3% by mass or more and 30% by mass or less, and still further preferably 5% by mass or more and 25% by mass or less.

The amount of hydroxyl groups in the polyvinyl acetal resin is preferably 15 mol% or more, and preferably 38 mol% or less. By setting the amount of hydroxyl groups to 15 mol% or more, adhesive properties tend to be better, and when used in an optical laminated body, the penetration resistance of the optical laminated body tends to be better. Further, by setting the amount of hydroxyl groups to 38 mol% or less, flexibility tends to be ensured, and it is possible to prevent the thermoplastic resin film from becoming too hard and the amount of change in thickness from decreasing. In addition, by adjusting the amount of hydroxyl groups to within the above range, it tends to be easier to adjust the storage modulus to within the desired range. Moreover, by adjusting the amount of hydroxyl groups to within the above range, it is possible to further suppress the formation of air bubbles in the peripheral portion of the thermoplastic resin film during compression bonding.

The amount of hydroxyl groups is more preferably 20 mol% or more, and further preferably 25 mol% or more. Further, the amount of hydroxyl groups is more preferably 35% or less, and further preferably 33 mol% or less.

When a polyvinyl butyral resin is used as the polyvinyl acetal resin, from the same viewpoint, the amount of hydroxyl groups is 15 mol% or more, preferably 38 mol% or less, more preferably 20 mol% or more, further preferably 25 mol% or more, more preferably 35% mol or less, and further preferably 33 mol% or less.

The amount of hydroxyl groups in the polyvinyl acetal resin is a value expressed as a percentage of the mole fraction calculated by dividing the amount of ethylene groups to which hydroxyl groups are bonded by the total amount of ethylene groups in the main chain.

The amount of ethylene groups to which the above hydroxyl groups are bonded can be measured by the procedure described in the Examples.

The polyvinyl acetal resin has a degree of acetylation of preferably 30 mol% or less, more preferably 20 mol% or less, further preferably 10 mol% or less, and still further preferably 2 mol% or less. When the degree of acetylation is equal to or lower than the upper limit, the moisture resistance of a polymer film increases. Further, the degree of acetylation is, although not particularly limited to, preferably 0.01 mol% or more, and more preferably 0.1 mol% or more.

The degree of acetylation is a value expressed as a percentage of the mole fraction calculated by dividing the amount of ethylene groups to which acetyl groups are bonded by the total amount of ethylene groups in the main chain. The amount of ethylene groups to which acetyl groups are bonded can be measured by the procedure described in the Examples.

The degree of acetalization of the polyvinyl acetal resin is preferably 47 mol% or more, and preferably 85 mol% or less. The degree of acetalization is more preferably 55 mol% or more, and further preferably 60 mol% or more, and is more preferably 80 mol% or less, and further preferably 75 mol% or less.

As used herein, "degree of acetalization" means the degree of butyralization when the acetal group is a butyral group and the polyvinyl acetal resin (A) is a polyvinyl butyral resin.

The degree of acetalization is a value expressed as a percentage of the mole fraction calculated by subtracting the amount of ethylene groups to which hydroxyl groups are bonded and the amount of ethylene groups to which acetyl groups are bonded from the total amount of ethylene groups in the main chain, and dividing that value by the total amount of ethylene groups. The degree of acetalization (degree of butyralization) may be calculated based on the amount of ethylene groups to which hydroxyl groups are bonded and the amount of ethylene groups to which acetyl groups are bonded, which are determined by the procedure described in the Examples.

The polyvinyl acetal resin is preferably an unmodified polyvinyl acetal resin, but may be a modified polyvinyl acetal resin.

A modified polyvinyl acetal resin has a structure (modifying group) other than an acetal group, a hydroxyl group, or an acetyl group, and preferably has a modifying group in a side chain. Examples of the modifying group include a group having a polyalkylene oxide structure in a side chain, and a group having an alkyl group (of about 2 to 30 carbon atoms, for example) other than an acetal group or an acetyl group in the side chain.

The level of modification is not particularly limited, but is, for example, 0.1 mol% or more to about 10 mol%. As used herein, "level of modification" refers to the ratio of functional groups to all vinyl monomer units constituting the polyvinyl acetal resin.

In addition, in the thermoplastic resin layer (A), one type of polyvinyl acetal resin may be used alone, or two or more types may be used in combination.

When a polyvinyl acetal resin is used as the thermoplastic resin (a), the thermoplastic resin layer (A) may contain a thermoplastic resin other than the polyvinyl acetal resin as long as the effects of the present invention are exhibited. Examples of the thermoplastic resin other than the polyvinyl acetal resin are as described above.

However, in the thermoplastic resin layer (A), it is preferred that the polyvinyl acetal resin is the main component. Specifically, the content of the polyvinyl acetal resin is, for example, with respect to the total amount of the thermoplastic resin (a) contained in the thermoplastic resin layer (A), 50% by mass or more, preferably 70% by mass or more, more preferably 90% by mass or more, and most preferably is 100% by mass. Therefore, the thermoplastic resin (a) contained in the thermoplastic resin layer (A) of the present invention may consist of a polyvinyl acetal resin.

The polyvinyl acetal resin preferably has a weight-average molecular weight (Mw) of 220,000 or more and 310,000 or less. When the weight-average molecular weight (Mw) of the polyvinyl acetal resin is 220,000 or more, it is possible to further suppress the formation of air bubbles in the thermoplastic resin film and to enhance the resistance to high temperature of the thermoplastic resin film, when the thermoplastic resin film is used in a high-temperature environment. When the weight-average molecular weight (Mw) of the polyvinyl acetal resin is 310,000 or less, the flexibility of the thermoplastic resin film can be enhanced and the amount of change in thickness during compressive creep can be further increased. From these viewpoints, the weight-average molecular weight (Mw) of the polyvinyl acetal resin is more preferably 230,000 or more and 305,000 or less, and further preferably 240,000 or more and 300,000 or less. The weight-average molecular weight (Mw) of the polyvinyl acetal resin is measured by gel permeation chromatography.

(Method for producing polyvinyl acetal resin)

The polyvinyl acetal resin is preferably produced by a production method that includes a mixing process of mixing the polyvinyl alcohol and the aldehyde, and an aging process of aging the mixture obtained in the mixing process.

In the mixing process, the polyvinyl alcohol and the aldehyde may be mixed according to a conventional method. Further, in addition to the polyvinyl alcohol and the aldehyde, a catalyst such as an acid catalyst may be further added to catalyze the acetalization reaction. For example, the aldehyde may be added to a mixture of the polyvinyl alcohol and an acid catalyst at a low temperature of about 0 to 40°C.

Further, when using two or more types of polyvinyl alcohols in combination (for example, when using two or more types of polyvinyl alcohols having different molecular weights), it is preferred to mix the two or more types of polyvinyl alcohols with the aldehyde.

The aging process is not particularly limited, but for example, may be carried out by adding a catalyst such as an acid catalyst to the mixture (reaction mixture) obtained in the mixing process, heating to the aging temperature, and holding at the aging temperature for a certain period of time. In the present production method, the polyvinyl acetal resin is obtained through the acetalization of the polyvinyl alcohol progresses in the mixing process and aging process.

After the reaction mixture is held at the above-described aging temperature for a certain period of time, the reaction mixture is appropriately cooled and neutralized, and may then be optionally washed with water, dried, and the like.

Examples of the acid catalyst added in the mixing process and the aging process include inorganic acids such as hydrochloric acid, nitric acid, phosphoric acid, sulfuric acid, and boric acid. Further, in the aging process, it is preferred to adjust the concentration of the acid catalyst to, for example, 0.5% by mass or more and 5% by mass or less, and preferably 1% by mass or more and 2.5% by mass or less.

The aging temperature in the aging process may be a relatively low temperature, for example, 30°C or higher and 65°C or lower, preferably 35°C or higher and 60°C or lower, and more preferably 40°C or higher and 57°C or lower. Further, the duration of holding at the above aging temperature (aging time) may be longer than the certain period of time, for example, 75 minutes or more and 180 minutes or less, preferably 90 minutes or more and 150 minutes or less, and more preferably 100 minutes or more and 140 minutes or less.

It is estimated that if the aging temperature and aging time are within the above desired ranges, the hydroxyl groups in the polyvinyl acetal resin are more likely to be uniformly distributed in the molecule, and as a result, the amount of change in thickness can be increased without significantly reducing the storage modulus at 90°C.

(Plasticizer)

It is preferred that the thermoplastic resin layer (A) contains a plasticizer. By containing a plasticizer, the thermoplastic resin layer (A) becomes flexible, and the adhesive properties of the thermoplastic resin layer (A) to various adherends, penetration resistance, and the like can be enhanced. In addition, it is easier to increase the amount of change in thickness.

Examples of the plasticizer include an organic ester plasticizer, an organic phosphoric acid plasticizer such as an organic phosphate ester plasticizer and an organic phosphite plasticizer, an organic ether plasticizer such an as polyalkylene glycol plasticizer, and an alcohol plasticizer.

One type of plasticizer may be used alone, or two or more types may be used in combination. Among the above, an organic ester plasticizer or an organic ether plasticizer is preferred.

Preferred examples of the organic ester plasticizer include a monobasic organic acid ester and a polybasic organic acid ester. Examples of the monobasic organic acid ester include an ester of a glycol and a monobasic organic acid. Examples of the glycol include a polyalkylene glycol in which each alkylene unit has from 2 to 4 carbon atoms, preferably 2 or 3 carbon atoms, and the number of repeating alkylene units is from 2 to 10, preferably from 2 to 4. Further, the glycol may be a monoalkylene glycol having from 2 to 4 carbon atoms, preferably 2 or 3 carbon atoms (that is, has one repeating unit).

Specific examples of the glycol include ethylene glycol, diethylene glycol, triethylene glycol, tetraethylene glycol, propylene glycol, dipropylene glycol, tripropylene glycol, tetrapropylene glycol, and butylene glycol.

Examples of the monobasic organic acid include an organic acid having from 3 to 10 carbon atoms, specifically, butyric acid, isobutyric acid, caproic acid, 2-ethylbutyric acid, heptylic acid, n-octylic acid, 2-ethylhexylic acid, n-nonylic acid, and decylic acid.

Examples of specific monobasic organic acids include triethylene glycol di-2-ethyl butyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, tetraethylene glycol di-2-ethylhexanoate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicapreate, triethylene glycol di-n-heptanoate, tetraethylene glycol di-n-heptanoate, triethylene glycol di-2-ethylbutyrate, ethylene glycol di-2-ethylbutyrate, 1,2-propylene glycol di-2-ethylbutyrate, 1,3-propylene glycol di-2-ethylbutyrate, 1,4-butylene glycol di-2-ethylbutyrate, and 1,2-butylene glycol di-2-ethylbutyrate.

Examples of the polybasic organic acid ester include an ester compound of a dibasic organic acids having from 4 to 12 carbon atoms, such as adipic acid, sebacic acid, and azelaic acid, and an alcohol having from 4 to 10 carbon atoms. The alcohol having from 4 to 10 carbon atoms may be a straight chain, or may have a branched structure or a cyclic structure.

Specific examples of the polybasic organic acid ester include dibutyl sebacate, dioctyl azelaate, dihexyl adipate, dioctyl adipate, hexylcyclohexyl adipate, diisononyl adipate, heptylnonyl adipate, dibutyl carbitol adipate, and a mixed type adipate ester. Alternatively, an oil-modified sebacic acid alkyd and the like may be used. Examples of the mixed adipate ester include an adipate ester produced from two or more alcohols selected from the group consisting of alkyl alcohols having from 4 to 9 carbon atoms and cyclic alcohols having from 4 to 9 carbon atoms.

The organic ester plasticizer is not limited to a complete ester of the above-described each ester, but may also be a partial ester. For example, the organic ester plasticizer may be a partial ester of a glycol and a monobasic organic acid, or a partial ester of a dibasic organic acid and an alcohol. Specific examples include triethylene glycol-mono-2-ethylhexanoate and the like.

Further, the organic ester plasticizer may be, for example, a partial ester of a trihydric or higher alcohol such as glycerin and a monobasic organic acid. Examples of the monobasic organic acid include a monobasic organic acid having from 3 to 24 carbon atoms, and preferably from 6 to 18 carbon atoms. Specific examples of a partial ester of a trihydric or higher alcohol and a monobasic organic acid include a mono- or diester of glycerin and stearic acid, and a mono- or diester of glycerin and 2-ethylhexylic acid.

Among the above-described organic ester plasticizers, it is particularly preferred to use triethylene glycol-di-2-ethylhexanoate (3GO).

Examples of the organic phosphoric acid plasticizer include a phosphate ester such as tributoxyethyl phosphate, isodecylphenyl phosphate, and triisopropyl phosphate.

Examples of the polyalkylene glycol plasticizer include a polyoxyalkylene compound having a polyoxyalkylene structure, specifically, a polyhydric alcohol compound such as a glycol, an ester compound of a glycol and a monobasic organic acid or polybasic organic acid, and an ether compound of a monohydric or polyhydric alcohol and a polyoxyalkylene. Here, examples of the glycol include a polyoxyalkylene glycol or derivatives thereof. Examples of the polyoxyalkylene include polyoxyethylene, polyoxypropylene, polyoxybutylene, a random copolymer or block copolymer thereof. As described above, the polyoxyalkylene compound may be a polyhydric alcohol compound, an ester compound, an ether compound, or a compound other than these.

Examples of the polyoxyalkylene compound include polyoxyalkylene or derivatives thereof. More specifically, examples of the polyoxyalkylene compound include a polyoxyalkylene glycol constituted of the above-described polyoxyalkylene, and an ether compound of a polyoxyalkylene and a polyhydric alcohol. In those compounds, all of the terminals may be hydroxyl groups, or those compounds may be a derivative in which a part or all of the hydrogen atoms in a terminal hydroxyl group are substituted with an alkyl group or an acyl group. The number of carbon atoms of the alkyl groups or acyl groups is not particularly limited, but may be about 1 to 8, and preferably from 1 to 4.

Examples of the polyoxyalkylene glycol include a polyoxyethylene polyoxypropylene glycol such as polyethylene glycol (polyoxyethylene glycol), polypropylene glycol (polyoxypropylene glycol), a poly(ethylene oxide/propylene oxide) block copolymer, and a poly(ethylene oxide/propylene oxide) random copolymer, and a polyoxybutylene glycol such as polytetramethylene glycol.

Examples of the ether compounds of a polyoxyalkylene and a polyhydric alcohol include an ether compound of a polyhydric alcohol such as glycerol, diglycerol, trimethylolpropane, erythritol, pentaerythritol, and bisphenol A and a polyoxyalkylene. Specific examples of the ether compounds of a polyoxyalkylene and a polyhydric alcohol include polyoxyethylene glyceryl ether, polyoxypropylene glyceryl ether, polyoxyethylene diglyceryl ether, polyoxypropylene diglyceryl ether, and polyoxyalkylene pentaerythritol ether. Further, examples of a derivative in which a part or all of the hydrogen atoms in a terminal hydroxyl group are substituted with an alkyl group or an acyl group include a derivative in which a part or all of the hydrogen atoms in a terminal hydroxyl group of the above-described polyoxyalkylene glycol or ether compound are substituted with an alkyl group or an acyl group. Specific examples of the derivative include polyoxyethylene glycol monomethyl ether, polyoxyethylene glycol dimethyl ether, polyoxypropylene glycol monomethyl ether, polyoxypropylene glycol dimethyl ether, polyoxyethylene polyoxypropylene glycol monomethyl ether, polyoxyethylene polyoxypropylene glycol dimethyl ether, polyoxyethylene glycol monobutyl ether, polyoxypropylene glycol monobutyl ether, and polyoxyethylene polyoxypropylene monobutyl ether.

Among the above polyoxyalkylene compounds, a compound having a polyoxyethylene, polyoxypropylene, or polyoxyethylene polyoxypropylene structure are preferred, and among them, a compound having a polyoxypropylene or polyoxyethylene polyoxypropylene structure is more preferred. Specifically, polyoxyethylene polyoxypropylene glycol, polyoxypropylene glyceryl ether, polyoxypropylene diglyceryl ether, or a derivative of these in which a part of the hydrogen atoms of a terminal hydroxyl group is substituted with an alkyl group are preferred.

Examples of the alcohol-based plasticizer include various polyhydric alcohols such as butanediol, hexanediol, trimethylolpropane, and pentaerythritol. Among these, trimethylolpropane is preferred.

The above-described plasticizers can be used alone or in combination of two or more. Among the plasticizers described above, triethylene glycol-di-2-ethylhexanoate (3GO), polyoxyethylene polyoxypropylene glycol, polyoxypropylene glyceryl ether, polyoxypropylene diglyceryl ether, or a derivative of these in which a part of the hydrogen atoms of a terminal hydroxyl group is substituted with an alkyl group are preferred, and triethylene glycol-di-2-ethylhexanoate (3GO) is more preferred.

The content of the plasticizer in the thermoplastic resin layer (A) is not particularly limited, but is preferably 10 parts by mass or more and 100 parts by mass or less with respect to 100 parts by mass of the thermoplastic resin (a). When the content of the plasticizer is 10 parts by mass or more, the thermoplastic resin layer (A) has appropriate flexibility, the adhesive properties of the thermoplastic resin layer (A) are good, and the penetration resistance of the optical laminated body is good. In addition, it is easier to increase the amount of change in thickness.

On the other hand, when the content of the plasticizer is 100 parts by mass or less, separation of the plasticizer from the thermoplastic resin layer (A) is prevented. Further, it is also possible to prevent the storage module from decreasing and the amount of change in thickness from becoming too large.

The content of the plasticizer is more preferably 15 parts by mass or more, further preferably 22 parts by mass or more, and still further preferably 30 parts by mass or more, and is more preferably 70 parts by mass or less, further preferably 60 parts by mass or less, and still further preferably 50 parts by mass or less.

Moreover, when the thermoplastic resin layer (A) includes a polyvinyl acetal resin, the content of the plasticizer in the thermoplastic resin layer (A) is preferably 30 parts by mass or more and 50 parts by mass or less with respect to 100 parts by mass of the polyvinyl acetal resin. When the content of the plasticizer is 30 parts by mass or more, the thermoplastic resin layer (A) has appropriate flexibility, the adhesive properties of the thermoplastic resin layer (A) are good, and the penetration resistance of the optical laminated body is good. In addition, it is easier to increase the amount of change in thickness.

On the other hand, when the content of the plasticizer is 50 parts by mass or less, separation of the plasticizer from the thermoplastic resin layer (A) is prevented. Further, it is also possible to prevent the storage module from decreasing and the amount of change in thickness from becoming too large.

The content of the plasticizer is more preferably 30 parts by mass or more, and is more preferably 45 parts by mass or less, and further preferably 40 parts by mass or less.

In addition to the plasticizer, the thermoplastic resin layer (A) may appropriately contain known additives used in combination with the thermoplastic resin (a). That is, although the thermoplastic resin layer (A) may consist of the thermoplastic resin (a) such as a polyvinyl acetal resin, or the thermoplastic resin (a) and a plasticizer, the thermoplastic resin layer (A) may also contain additives other than these that are added as necessary.

Examples of additives other than a plasticizer specifically include an ultraviolet absorber, an infrared absorber, an antioxidant, a light stabilizer, an adhesive force regulator, a colorant (pigment or dye), an optical brightener, and a crystal nucleating agent.

<Colorant>

The thermoplastic resin layer (A) may or may not contain a colorant. By using the above-described colorant, the laminated glass can be suitably colored to have a desired color hue. The above-described colorants may be used alone or in combination of two or more. The thermoplastic resin layer (A) may contain only one type of colorant, may contain two or more types of colorant, may contain three or more types of colorant, may contain 10 or less types of colorant, or may contain 5 or less types of colorant.

Examples of the colorant include pigments and dyes. The colorant may be a pigment, a dye, or both a pigment and a dye. There are also colorants that are classified as both a pigment and a dye.

Pigment:

The colorant may contain, or be, a pigment. The thermoplastic resin layer (A) may or may not contain a pigment. The above-described pigments may be used alone or in combination of two or more. The thermoplastic resin layer (A) may contain only one type of pigment, may contain two or more types of pigment, may contain three or more types of pigment, may contain 10 or less types of pigment, or may contain 5 or less types of pigment.

Examples of the pigment include a perylene compound, a threne compound, a quinacridone compound, a diketopyrrolopyrrole compound, an anthraquinone compound, a perinone compound, a phthalocyanine compound, an indanthrene compound, an indigo compound, an isoindolinone compound, a nickel complex compound, a methine compound, an azomethine compound, a dioxazine, an azo compound, and a carbon black.

When the thermoplastic resin layer (A) contains a pigment, the content of the pigment in 100% by mass of the thermoplastic resin layer (A) is preferably 0.0001% by mass or more, more preferably 0.01% by mass or more, and further preferably is 0.02% by mass or more, and is preferably 0.15% by mass or less, and more preferably 0.12% by mass or less. When the content of the pigment is equal to or more than the above lower limit and equal to or less than the above upper limit, the effects of the present invention can be exhibited even more effectively.

Dye:

The colorant may contain, or be, a dye. The thermoplastic resin layer (A) may or may not contain a dye. The above-described dyes may be used alone or in combination of two or more. The thermoplastic resin layer (A) may contain only one type of dye, may contain two or more types of dye, may contain three or more types of dye, may contain 10 or less types of dye, or may contain 5 or less types of dye.

Examples of the dye include a perylene compound, a threne compound, a quinacridone compound, a diketopyrrolopyrrole compound, an anthraquinone compound, a perinone compound, a phthalocyanine compound, an indanthrene compound, an indigo compound, an isoindolinone compound, a nickel complex compound, a methine compound, an azomethine compound, a dioxazine, and an azo compound.

When the thermoplastic resin layer (A) contains a dye, the content of the dye in 100% by mass of the thermoplastic resin layer (A) is preferably 0.00001% by mass or more, more preferably 0.0001% by mass or more, and further preferably 0.001% by mass or more, and is preferably less than 0.015% by mass, and more preferably 0.01% by mass or less. When the content of the dye is equal to or more than the above lower limit and equal to or less than the above upper limit (or less than the above upper limit), the effects of the present invention can be exhibited even more effectively.

When the thermoplastic resin layer (A) contains a colorant, the content of the colorant in 100% by mass of the thermoplastic resin layer (A) is preferably 0.00001% by mass or more, more preferably 0.0001% by mass or more, and further preferably 0.001% by mass or more, and is preferably 0.15% by mass or less, and more preferably 0.12% by mass or less. When the content of the colorant is equal to or more than the above lower limit and equal to or less than the above upper limit (or less than the above upper limit), the effects of the present invention can be exhibited even more effectively.

The thickness of the thermoplastic resin film is not particularly limited, but is, for example, 100 μm or more and 2000 μm or less, preferably 200 μm or more and 1300 μm or less, and more preferably 300 μm or more and 1000 μm or less. When the thickness of the thermoplastic resin film is equal to or more than the above lower limit value, impact resistance can be enhanced and adhesion with the transparent material substrate and the like is easily ensured. On the other hand, when the thickness is equal to or less than the above upper limit value, it is possible to prevent the thickness of the optical laminated body from being thicker than necessary.

As described above, the thermoplastic resin film according to the present invention has a single-layer structure or a multilayer structure. When the thermoplastic resin film according to the present invention has a multilayer structure, some of the layers may be the thermoplastic resin layer (A), or all of the layers may be the thermoplastic resin layer (A). Moreover, in the case of a multilayer structure, either one of the outermost layers may be the thermoplastic resin layer (A), but it is preferred that both outermost layers are the thermoplastic resin layer (A). When both outer layers are the thermoplastic resin layer (A), it is easier to suppress residual air and formation of peripheral air bubbles during compression bonding onto a transparent material substrate and the like. On the other hand, in the case of a single-layer structure, the thermoplastic resin film may be composed of a single layer of the above-described thermoplastic resin layer (A).

When the thermoplastic resin film has a two-layer structure, for example, either one of the layers may be a thermoplastic resin layer (A), but it is preferred that both layers are thermoplastic resin layers (A).

Further, when the thermoplastic resin film has a three-layer structure having two outermost layers and a middle layer, it suffices that either one of the two outermost layers is a thermoplastic resin layer (A). However, it is preferred that both of the outermost layers are thermoplastic resin layers (A). In this case, the middle layer may be composed of a thermoplastic resin layer (A), but may also be composed of a material other than the thermoplastic resin layer (A).

In addition, the thermoplastic resin film may have a structure of four or more layers having two outermost layers and two or more middle layers. In this case, although it suffices that either one of the two outermost layers is a thermoplastic resin layer (A), it is preferred that both of the outermost layers are thermoplastic resin layers (A). Moreover, each middle layer may be composed of a thermoplastic resin layer (A), but may also be composed of a material other than the thermoplastic resin layer (A).

Further, when the thermoplastic resin film according to the present invention has a plurality of thermoplastic resin layers (A), the thermoplastic resin layers (A) may have the same structure or different structures. For example, in the plurality of thermoplastic resin layers (A), the type and content of the polyvinyl acetal resin constituting each layer may be the same or different.

Further, when the thermoplastic resin film has a layer other than the thermoplastic resin layer (A), such layer may be a thermoplastic resin layer other than the thermoplastic resin layer (A). The type of the thermoplastic resin used in the thermoplastic resin layer other than the thermoplastic resin layer (A) is not particularly limited, but may be appropriately selected and used from among the resins listed as examples of the thermoplastic resin (a) that can be used for the thermoplastic resin layer (A). The types of resins that can be suitably used are also the same, and therefore it is particularly preferred to use a polyvinyl acetal resin.

In the thermoplastic resin film, the thickness of the thermoplastic resin layer (A) is not particularly limited, but it is preferred that the thickness accounts for a certain proportion or more of the total thickness of the thermoplastic resin film. Specifically, the proportion of the thickness of the thermoplastic resin layer (A) may be, with respect to the total thickness of the thermoplastic resin film, for example, 0.1 or more and 1 or less, and is preferably 0.3 or more and 1 or less, more preferably 0.5 or more and 1 or less, and further preferably 0.75 or more and 1 or less. Here, when there are two or more thermoplastic resin layers (A), "the thickness of the thermoplastic resin layer (A)" refers to the total thickness of the two or more thermoplastic resin layers (A). By containing the thermoplastic resin layer (A) in the thermoplastic resin film at a certain thickness proportion or more, it is easier to suppress residual air and the formation of air bubbles at the peripheral portion during compression bonding.

The specific thickness of each thermoplastic resin layer (A) is not particularly limited, but is, for example, 50 $\mu$m or more and 1500 $\mu$m or less, preferably 100 $\mu$m or more and 1000 $\mu$m or less, and more preferably 200 $\mu$m or more and 900 $\mu$m or less. When the thermoplastic resin layer (A) has a thickness equal to or more than a certain level, it is easier to suppress residual air and the formation of air bubbles at the peripheral portion during compression bonding. Further, by setting the thickness to a certain level or less, it is possible to prevent the thermoplastic resin film from being thicker than necessary.

The method for producing the thermoplastic resin film is not particularly limited, and the thermoplastic resin film may be produced by a conventionally known method. For example, the thermoplastic resin film may be produced by extrusion molding, press molding, and the like, but extrusion molding is preferred.

Further, the thermoplastic resin film may have uneven shapes on one or both surfaces. The method for forming the uneven shapes is not particularly limited, and examples of the method include a lip embossments method, an embossments roll method, and a calender roll method.

[Laminated body]

The laminated body according to the present invention includes the thermoplastic resin film according to the present invention and a functional layer different from the thermoplastic resin film according to the present invention. By using a thermoplastic resin film having the thermoplastic resin layer (A), the laminated body according to the present invention eliminates the need to use an autoclave process under high-temperature and high-pressure conditions when incorporating a functional layer in an optical laminated body and the like, and thus it is possible to prevent the functionality of the functional layer from being lost. It is preferred that the functional layer is arranged between a pair of the thermoplastic resin films according to the present invention.

However, the functional layer may be arranged between the thermoplastic resin film according to the present invention and a thermoplastic resin film other than the thermoplastic resin film according to the present invention described above. In addition, the layer structure of the laminated body is not limited to a structure in which the functional layer is arranged between a pair of thermoplastic resin films, and can take various forms as described below.

(Functional layer)

The functional layer used in the laminated body according to the present invention is not particularly limited as long as it has a certain function. For example, a functional film can be used as the functional layer used in the laminated body according to the present invention. The functional film may be a light control film, a display element film, or an optical film such as a polarizing film, a retardation film, and an antireflection film. Moreover, a solar cell element can also be used as the functional layer.

Further, among the above-described functional films, it is preferred that the functional film is a film having electronic components, for example, a light control film or a display element film. Films having electronic components tend to deteriorate or lose functionality when integrated in an autoclave under high-temperature and high-pressure conditions. However, according to the present invention, because there is no need to perform compression bonding in an autoclave process under high-temperature and high-pressure conditions, it is possible to incorporate the functional layer in an optical laminated body and the like without losing the functionality of the functional layer. Therefore, even films having electronic components can be incorporated in the laminated body in a manner that allows for practical use.

In addition, when optical laminated body having either a light control film or a display element film is incorporated in various types of window glass, it is possible to provide window glass having a high added value, and so in the present invention it is desirable to use either one of those functional films as a functional layer.

A light control film is a film-like member that has a light control element. Specifically, the light control element is preferably the light control film including two resin films and a light control layer arranged between the two resin films. Therefore, the adhesive surface of the light control film with the thermoplastic resin film is a resin material, and the adhesive strength to the thermoplastic resin film tends to be high. Examples of the resin film used in the light control element include, but are not particularly limited to, a polyester resin film such as a PET film and a PEN film, a (meth)acrylic resin film, a TAC film, a PES resin film, and a polyimide resin film. Among these, a polyester resin film is preferred from the viewpoint of handleability and the like, and of those a PET film is more preferred. In addition, a conductive layer constituting an electrode is provided on the surface on the light control layer side of each of the two resin films.

The visible light transmittance of the light control layer changes by switching between applying and not applying a voltage between the conductive layers of the two resin films. The light control layer may be composed of a liquid crystal layer such as a polymer dispersed liquid crystal (PDLC), and the light control film may be a PDLC film. Further, the light control film may be an SPD (Suspended Particle Device) film, an electrochromic film, an electrophoretic film device, or the like. Therefore, the light control layer may be an SPD layer containing a resin matrix and a light control suspension dispersed in the resin matrix, or may be an electrochromic material layer. Alternatively, the light control layer may be, for example, an electrophoretic layer that contains electrophoretic particles and a dispersant that disperses the electrophoretic particles.

A display element film is a film-like member that has a display element. Examples of the display element film include a film having a resin film and a display element mounted on the resin film. The display element film may include a pair of resin films and a display element provided therebetween. According to such a configuration, when the display element film is incorporated in the optical laminated body by arranging it between a pair of thermoplastic resin films, the display element film can be adhered to the thermoplastic resin film with high adhesion. In addition, the resin film used for the display element film can be appropriately selected and used from among the resin films given as examples for the light control film.

Further, in the display element film as well, a conductive layer constituting an electrode may be provided on the surface on the display element side of the resin film. Examples of the display element include an organic EL element, an LED display, and a segment display, and among these, an organic EL element is preferred. That is, the display element film is preferably an organic EL film.

The functional film having electronic components is not limited to the above-described display element film and light control film, and may be another functional film. Although the electronic components may be mounted on a resin film in the same manner as the display element film or the light control film, a preferred aspect is one in which the electronic components are arranged between a pair of resin films.

By using a solar cell element in the functional layer, laminated glass for building-integrated photovoltaics (BIPV) can be provided.

The solar cell element is not particularly limited, and may be any solar cell element used in building-integrated photovoltaics (BIPV). Examples of the solar cell element include crystalline or thin-film silicon type solar cell elements; compound semiconductor type solar cell elements such as CIS, CIGS, CdTe, and GaAs; and an organic type solar cell elements such as dye sensitizers, organic thin films, and perovskites.

The laminated body can be produced by, for example, thermocompression bonding the functional layer and the thermoplastic resin film. Further, when incorporating a laminated body into an optical laminated body, the functional layer and the thermoplastic resin film may be subjected to thermocompression bonding in advance to form a laminated body, and the obtained laminated body may be compression bonded with transparent material substrates to form the optical laminated body. In addition, in the process of arranging the functional layer before compression bonding and the thermoplastic resin film between the transparent material substrates and compression bonding the transparent material substrates and the thermoplastic resin film, the functional layer and the interlayer film may also be subjected to compression bonding together.

[Optical laminated body]

The optical laminated body according to the present invention includes a first transparent material substrate, a second transparent material substrate, and the thermoplastic resin film according to the present invention or laminated body according to the present invention arranged between the first and second transparent material substrates.

[First and second transparent material substrates]

Examples of the first and second transparent material substrates used in the optical laminated body according to the present invention include a glass sheet. The glass sheet may be either an inorganic glass or an organic glass, but an inorganic glass is preferable. Examples of the inorganic glass include, but are not particularly limited to, clear glass, float glass, tempered glass, colored glass, polished glass, patterned glass, wired glass, lined glass, ultraviolet absorbing glass, infrared reflecting glass, infrared absorbing glass, and green glass.

Further, as the organic glass, a glass that is generally referred to as "resin glass" is used. Examples thereof include various organic glass sheets, such as a (meth)acrylic sheet such as a polycarbonate sheet and a polymethyl methacrylate sheet, an acrylonitrile styrene copolymer sheet, an acrylonitrile butadiene styrene copolymer sheet, a polyester sheet such as a polyethylene terephthalate sheet, a fluororesin sheet, a polyvinyl chloride sheet, a chlorinated polyvinyl chloride sheet, a polypropylene sheet, a polystyrene sheet, a polysulfone sheet, an epoxy resin sheet, a phenol resin sheet, an unsaturated polyester resin sheet, and a polyimide resin sheet. The organic resin sheet may be subjected to, for example, a surface treatment as appropriate.

The first and second transparent material substrates may be composed of the same type of material or different materials. For example, one laminated glass member may be an inorganic glass and the other laminated glass member may be an organic glass, but it is preferred that the first and second transparent material substrates are both an inorganic glass or organic glass.

Further, the thickness of each glass sheet used as the first and second transparent material substrates is not particularly limited, but is, for example, about 0.1 mm or more and 15 mm or less, and preferably 0.5 mm or more and 5 mm or less. The thickness of each glass sheet may be the same or different.

The transparent material substrates may be composed of a single glass sheet, or may be a glass sheet to which another member is attached. The transparent material substrates may have various functions provided by attaching a functional member to the glass sheet.

The other member may be, for example, a member constituting an electronic device, an optical member, or the like, but is preferably a member constituting a display device. The display device may be a liquid crystal display device, an organic EL display device, an LED display device, a segment display device, or the like. Among these display devices, a liquid crystal display device is preferred.

The display device is preferably a display panel, for example, in which the glass sheet is used as a substrate and a display layer such as a liquid crystal layer or an organic EL layer, a light emitting element, and the like are provided on the substrate. The glass sheet that serves as the substrate for the display panel may be used as the transparent material substrate.

In addition, although the functional layers such as the functional film described later, a conductive layer that constitutes electrodes or sensors, an antireflection layer and a hard coat layer, and the like may be laminated on the glass sheet, the transparent material substrate may be a glass sheet on which such functional films or functional layers are laminated.

Therefore, the bonding surface with the thermoplastic resin film on which the thermoplastic resin film is directly laminated may be the glass sheet itself, or may also be the surface of the functional film or functional layer.

When two or more thermoplastic resin films are provided in the laminated body, as described above, although it is preferred that all the thermoplastic resin films are the thermoplastic resin film according to the present invention, it is acceptable if some of the thermoplastic resin films are a thermoplastic resin film other than the thermoplastic resin film according to the present invention. Further, another layer such as an adhesive layer may be provided as appropriate between the functional layer and the thermoplastic resin film.

[Layer structure of optical laminated body]

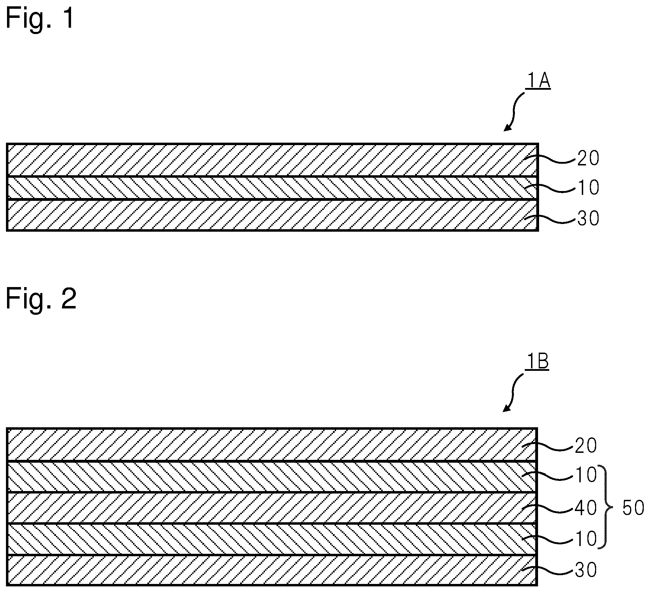

Next, the layer structure of the optical laminated body will be described in detail with reference to embodiments while referring to the drawings. As shown in Fig. 1, in a first embodiment of the present invention, the optical laminated body is an optical laminated body 1A which includes one thermoplastic resin film 10 (thermoplastic resin layer (A)) between first and second transparent material substrates 20 and 30. In the optical laminated body 1A, the thermoplastic resin film 10 is adhered to both the first and second transparent material substrates 20 and 30 to join them together.

In the first embodiment, as described above, it is preferred that another member is attached to at least one of the first and second transparent material substrates 20 and 30. Specifically, a functional member constituting an electronic device such as a display device, an optical member, or the like may be attached thereto, or the above-described functional film, functional layer, and the like may be laminated thereon.

Among these, it is preferred that a member constituting a display device, particularly a liquid crystal display device is attached to at least one of the first and second transparent material substrates 20 and 30. That is, it is preferred that at least one of the first and second transparent material substrates 20 and 30 is a glass sheet that constitutes a display device, and it is preferred that a display device which uses at least one of the first and second transparent material substrates 20 and 30 as a substrate is attached to the optical laminated body 1A.

In the first embodiment, by using a thermoplastic resin film 10 including the above-described thermoplastic resin layer (A), appearance defects and reduced transparency due to residual air or the formation of air bubbles can be suppressed even if the first and second transparent material substrates 20 and 30 and the thermoplastic resin film 10 are integrated without going through an autoclave process under high-temperature and high-pressure conditions. On the other hand, even if a functional member is provided on any one of the first and second transparent material substrates 20 and 30, it is possible to integrate by compression bonding without going through an autoclave process under high-temperature and high-pressure conditions, and therefore it is possible to prevent the functional member attached to the optical laminated body 1A from deteriorating or losing functionality.

Further, as another preferred embodiment, the optical laminated body may have a plurality of thermoplastic resin films provided between the first and second transparent material substrates. When a plurality of thermoplastic resin film are provided, it is preferred that each thermoplastic resin film is the thermoplastic resin film according to the present invention having the above-described thermoplastic resin layer (A). When a plurality of thermoplastic resin films are provided, by using the above-described thermoplastic resin film for all of those thermoplastic resin films, appearance defects due to residual air or the formation of air bubbles can be suppressed even if the first and second transparent material substrates and the thermoplastic resin films are integrated without going through an autoclave process under high-temperature and high-pressure conditions.

An embodiment of an optical laminated body in which a plurality of thermoplastic resin films are provided in a laminated body is shown in Fig. 2 as a second embodiment. As shown in Fig. 2, an optical laminated body 1B according to the second embodiment includes a pair of thermoplastic resin films 10 provided between the first and second transparent material substrates 20 and 30, and further includes a functional layer 40 between the pair of thermoplastic resin films 10. That is, in the optical laminated body 1B according to the second embodiment, a laminated body 50 in which the functional layer 40 is provided between a pair of thermoplastic resin films 10 is provided between the first and second transparent material substrates 20 and 30. It is preferred that each of the pair of thermoplastic resin films 10 is the above-described thermoplastic resin film according to the present invention.

In the optical laminated body 1B, one thermoplastic resin film 10 is adhered to both the first transparent material substrate 20 and the functional layer 40 to join them together, and the other thermoplastic resin film 10 is adhered to both the second transparent material substrate 30 and the functional layer 40 to join them together. As a result, the first and second transparent material substrates 20 and 30 are integrated with the functional layer 40 by the thermoplastic resin films 10.

In the second embodiment, the optical laminated body 1B may also be integrated through an autoclave process under high-temperature and high-pressure conditions. However, by using a thermoplastic resin film 10 that has the thermoplastic resin layer (A) without going through an autoclave process under high-temperature and high-pressure conditions, it is possible to prevent appearance defects due to residual air and the formation of air bubbles. Further, since the optical laminated body 1B is integrated at a low temperature, it is also possible to prevent the functional layer 40 from deteriorating or losing functionality.

In addition, in the second embodiment, an aspect is shown in which two thermoplastic resin films 10 and one functional layer 40 are provided in the laminated body, but three or more thermoplastic resin films and two or more functional layers may be provided in the laminated body. In this case, the thermoplastic resin films and functional layers may be arranged alternately. Further, it is preferred that a thermoplastic resin film is arranged at the position closest to the first and second transparent material substrates.

For example, when three thermoplastic resin films 10 and two functional layers are provided, the arrangement order is preferably first transparent material substrate/thermoplastic resin film/functional layer/thermoplastic resin film/functional layer/thermoplastic resin film/second transparent material substrate.

Further, when three or more thermoplastic resin films are provided, it is preferred to use a thermoplastic resin film having the above-described thermoplastic resin layer (A) for each thermoplastic resin film.

In the optical laminated body, when a plurality of thermoplastic resin films are provided, the configuration of each thermoplastic resin film may be the same or different.

<Optical laminated body production method>

It is preferred to produce the optical laminated body according to the present invention by arranging at least a thermoplastic resin film or a laminated body between a first transparent material substrate and a second transparent material substrate, and bonding them together by compression bonding to obtain the optical laminated body. Further, an optical laminated body incorporating a laminated body may be produced by preparing the members constituting the laminated body, arranging the members constituting the laminated body between a first transparent material substrate and a second transparent material substrate, and bonding them together by compression bonding.

In the above-described production method, firstly, the first and second transparent material substrates and the member (thermoplastic resin film, or laminated body) to be arranged between the first and second transparent material substrates are prepared.

Here, the laminated body to be arranged between the first and second transparent material substrates may be appropriately selected according to the structure of the optical laminated body to be obtained. For example, in the first embodiment, a single thermoplastic resin film may be prepared. Further, for example, in the second embodiment, a laminated body composed of two thermoplastic resin films and one functional layer may be prepared.

Further, as described above, in the optical laminated body, in some cases a functional member may be attached to at least one of the first and second transparent material substrates, but it is preferred that the functional member is attached to a transparent material substrate before integrating with the optical laminated body. Therefore, in the above-described production method, at least one of the first and second transparent material substrates may be prepared as the transparent material substrate to which the functional member is attached. For example, as described above, if the transparent material substrate constitutes the substrate of a display device, at least one of the first and second transparent material substrates may be prepared as the display device.

In the present production method, as described above, a thermoplastic resin film or a laminated body may be arranged between the first transparent material substrate and the second transparent material substrate, and those parts may be integrated by bonding them together to obtain the optical laminated body. Alternatively, a member constituting a laminated body may be arranged between the first transparent material substrate and the second transparent material substrate, and those parts may be integrated by bonding them together to obtain an optical laminated body incorporating the laminated body. Here, the thermoplastic resin film or the laminated body may be arranged according to the layer structure of the optical laminated body to be obtained. For example, in the second embodiment, a thermoplastic resin film, a functional layer, and a thermoplastic resin film may be arranged in that order between the first and second transparent material substrates.

The bonding may be performed using a vacuum bag, an autoclave under low-temperature conditions, or a pressing machine other than these. However, among these methods, it is preferred to use a vacuum bag. Further, before performing the bonding, preliminary compression bonding may be carried out using a rubber roll or the like.

In the present production method, it is necessary to perform the bonding under low-temperature conditions. Specifically, it is preferred to perform the compression bonding at a temperature of 110°C or lower. Further, it is preferred that the bonding is compression bonding performed at preferably a low temperature and low pressure, specifically, at a temperature of 110°C or lower and a pressure of 1.0 MPa or less. By performing the bonding under low-temperature and low-pressure conditions in this way, it is possible to prevent the functional layer and the functional members (for example, display devices) attached to the first and second transparent material substrates from deteriorating or losing functionality.

The temperature during bonding is preferably 100°C or lower from the viewpoint of more reliably preventing the functional members from deteriorating or losing functionality, and preferably 60°C or higher, more preferably 70°C or higher, from the viewpoint of preventing the occurrence of residual air and the formation of air bubbles.

Further, the pressure during bonding is preferably 1.2 MPa or less from the viewpoint of more reliably preventing the functional members from deteriorating or losing functionality. In addition, when the bonding is performed under negative pressure, such as when using a vacuum bag, the pressure may be, for example, 0.095 MPa or less, preferably 0.08 MPa or less, and preferably 0.06 MPa or less.

The pressure when performing the bonding is not particularly limited in terms of the lower limit value, but for example, when the bonding is carried out under pressure such as in an autoclave, the pressure is preferably 0.5 MPa or more, and more preferably 0.7 MPa or more. Further, when performing the bonding under negative pressure as in the case of using a vacuum bag, the pressure is preferably 0.001 MPa or more, and more preferably 0.005 MPa or more.

Further, the duration of the bonding at the above-described temperature and pressure is not particularly limited, but is, for example, from 5 to 120 minutes, and preferably from 10 to 60 minutes.

The optical laminated body according to the present invention is not particularly limited, and can be used for various applications, but can be suitably used as laminated glass. For example, the optical laminated body according to the present invention can be used for the window glass of vehicles such as automobiles and trains, various conveyances such as ships and aircraft, or various structures such as buildings, apartments, detached houses, halls, and gymnasiums, or machine tools such as cutting and polishing tools, working machinery such as excavators and cranes, and the like, and for the partitions inside various conveyances and various structures. Among these, applications in vehicles such as automobiles are preferred, and applications for the window glass of a vehicle is preferred.

Further, the optical laminated body according to the present invention may be used for various display applications, for example, when a display device is built from a transparent material substrate. As a display application, the above-described window glass or partition may be used as a display.

Additionally, the optical laminated body may be used, for example, as a cover glass for various displays, and may be applied to, for example, an in-vehicle display.

Examples

The present invention will now be described in more detail with reference to Examples, but the present invention is not limited to these Examples in any way. In addition, the methods for measuring and evaluating the various physical property values in the present invention are as follows.

<Amount of hydroxyl groups, degree of acetylation, and degree of acetalization>

- Measurement of content (% by mass) of ethylene groups to which a hydroxyl group is bonded

A sample 0.4 g was precisely weighed into a 200 mL Erlenmeyer flask having a stopper. After adding 10.0 mL of a pyridine-acetic anhydride mixed solution to the sample, the sample was dissolved in the pyridine-acetic anhydride mixed solution by heating and subjecting to ultrasonic irradiation on a water bath with a bath temperature of 90°C. A reflux condenser tube was attached to the Erlenmeyer flask, and the mixture was heated under reflux on a water bath for 120 minutes. After the reaction, the condenser tube was washed with 25 mL of pyridine, and the sample solution after the reaction was cooled to room temperature. After cooling, 20 mL of 1,2-dichloroethane was added to the sample solution and shaken. Then, 50 mL of water was additionally added, shaken, and the mixture was allowed to stand at room temperature for 30 minutes. Then, the sample solution was subjected to potentiometric titration with a 0.5 mol/L (0.5 N) sodium hydroxide solution. A blank test was conducted in the same manner except that no sample was used, and the content (% by mass) of ethylene groups to which a hydroxyl group is bonded in the sample was determined based on the following expression.

$$W_{OH} = \frac{(V_{BL} - V_{sp}) \times 2.2 \times f_{NaOH}}{m \times 100} \times 100$$

In the expression, $W_{OH}$ is the content (% by mass) of ethylene groups to which a hydroxyl group is bonded, $V_{BL}$ is the amount of sodium hydroxide solution used in the blank test (mL), $V_{sp}$ is the amount of sodium hydroxide solution used in the sample titration (mL), $f_{NaOH}$ is the factor of the 0.5 mol/L sodium hydroxide solution actually used in the potentiometric titration, and m is the sample mass (g).

- Measurement of content (% by mass) of ethylene groups to which an acetyl group is bonded

A sample 0.4 g was precisely weighed into a 200 mL Erlenmeyer flask having a stopper. After adding 100.0 mL of ethanol to the sample, the sample was dissolved in the ethanol by heating and subjecting to ultrasonic irradiation on a water bath with a bath temperature of 90°C. While shaking the Erlenmeyer flask, 10.0 mL of 0.2 mol/L (0.2 N) sodium hydroxide was added. A reflux condenser tube was attached to the Erlenmeyer flask, and the mixture was heated under reflux in a water bath for 60 minutes. After the reaction, the condenser tube was washed with 25 mL of ethanol, and the sample solution after the reaction was cooled to room temperature. After cooling, 10.0 mL of 0.2 mol/L (0.2 N) hydrochloric acid was added to the sample solution, shaken thoroughly, and allowed to stand at room temperature for 30 minutes. Then, the sample solution was subjected to potentiometric titration with a 0.1 mol/L (0.1 N) sodium hydroxide solution. A blank test was conducted in the same manner except that no sample was used, and the content (% by mass) of ethylene groups to which an acetyl group is bonded in the sample was determined based on the following expression.

$$W_{Ac} = \frac{(V_{sp} - V_{BL}) \times 0.86 \times f_{NaOH}}{m \times 100} \times 100$$

In the expression, $W_{AC}$ is the content (% by mass) of ethylene groups to which an acetyl group is bonded, $V_{BL}$ is the amount of sodium hydroxide solution used in the blank test (mL), $V_{sp}$ is the amount of sodium hydroxide solution used in the sample titration (mL), $f_{NaOH}$ is the factor of the 0.1 mol/L sodium hydroxide solution actually used in the potentiometric titration, and m is the sample mass (g).

- Measurement of content (% by mass) of ethylene groups to which a butyral group is bonded

The content (% by mass) of ethylene groups to which a butyral group is bonded was determined based on the following expression from the content (% by mass) of ethylene groups to which a hydroxyl group is bonded and the content (% by mass) of ethylene groups to which an acetyl group is bonded determined by the methods described above.

$$W_{Bu} = 100 - (W_{OH} + W_{Ac})$$

In the expression, $W_{BU}$ is the content (% by mass) of ethylene groups to which a butyral group is bonded, $W_{OH}$ is the content (% by mass) of ethylene groups to which a hydroxyl group is bonded, and $W_{AC}$ is the content (% by mass) of ethylene groups to which an acetyl group is bonded.

- Amount of hydroxyl groups, degree of acetylation, and degree of acetalization (degree of butyralization)

The amount of hydroxyl groups (mol%), the degree of acetylation (mol%), and the degree of acetalization (mol%) were determined based on the following expression using the content (% by mass) of ethylene groups to which a hydroxyl group is bonded, the content of ethylene groups to which an acetyl group is bonded, and the content of ethylene groups to which a butyral group is bonded determined by the methods described above.

$$\text{Amount of hydroxyl groups} = \frac{\dfrac{W_{OH}}{44}}{\dfrac{W_{OH}}{44} + \dfrac{W_{Ac}}{86} + \dfrac{W_{Bu}}{71}} \times 100$$

$$\text{Degree of acetylation} = \frac{\dfrac{W_{Ac}}{86}}{\dfrac{W_{OH}}{44} + \dfrac{W_{Ac}}{86} + \dfrac{W_{Bu}}{71}} \times 100$$

$$\text{Degree of acetalization} = \frac{\dfrac{W_{Bu}}{71}}{\dfrac{W_{OH}}{44} + \dfrac{W_{Ac}}{86} + \dfrac{W_{Bu}}{71}} \times 100$$

<Amount of change in thickness when performing compressive creep test>

A test sample having a diameter of 8 mm was produced by cutting out the thermoplastic resin film of each Example and Comparative Example according to the method described in the specification. Using the produced test sample, the amount of change in thickness was determined according to the method described in the specification.

<Storage modulus>

The thermoplastic resin films obtained in the Examples and Comparative Examples were held for 12 hours in an environment having a room temperature of 23 $\pm$2°C and a humidity of 25 $\pm$5%. The viscoelasticity was measured using a dynamic viscoelasticity measurement device (product name: "ARES-G2", manufactured by TA INSTRUMENTS) using an "8 mm diameter parallel plate" jig under the following measurement conditions, and the shear storage modulus (G') at 90°C was detected.

(Measurement conditions)

Deformation mode: Shear mode, measurement temperature: -20°C or higher and 100°C or lower, heating rate: 3°C/min, measurement frequency: 1 Hz, strain: 1%
Deformation mode: Shear mode, measurement temperature: 100°C or higher and 200°C or lower, heating rate: 3°C/min, measurement frequency: 1 Hz, strain: 5%

<Complex viscosity at 200°C>

The complex viscosity at 200°C of each Example and each Comparative Example was measured in accordance with the method described in the specification.

<Film formability>

Using a HAAKE PolyLab OS RheoDrive 16 and a Reomex OS (manufactured by Thermo Fisher Scientific), a resin composition obtained by kneading 100 parts by mass of thermoplastic resin and 40 parts by mass of plasticizer (triethylene glycol-di-2-ethylhexanoate: 3GO) while heating to 200°C was extruded into a sheet to obtain a thermoplastic resin film having a thickness of 0.76 mm. The film formability of the thermoplastic resin film at that time was evaluated according to the following three grades.

A: No abnormalities in film formability
B: Film formation possible
C: Abnormalities in film formation or appearance.

<Formation of air bubbles at periphery>

The glass obtained in the Examples was placed on a blackout curtain, and the transparency of the optical laminated body was visually observed and evaluated based on the amount of residual air according to the following three grades.

A: No air bubbles at periphery
B: Some air bubbles at periphery
C: Lots of air bubbles at periphery

<Residual air after bonding>

The glass obtained in the Examples was placed on a blackout curtain, and the transparency of the optical laminated body was visually observed and evaluated based on the amount of residual air according to the following three grades.

A: No residual air
B: Some residual air
C: Lots of residual air

The thermoplastic resins used in the Examples and Comparative Examples were prepared as follows.

(Resin 1)

Into a reactor equipped with a stirring device, 1800 mL of ion-exchanged water and 200 g of a polyvinyl alcohol A (average degree of polymerization 1700, degree of saponification 98 mol%) were charged and dissolved by heating while stirring to obtain a polyvinyl alcohol solution. Next, 30% hydrochloric acid was added as a catalyst to the solution so that the hydrochloric acid concentration was 0.2% by mass, the temperature was adjusted to 15°C, and then, while stirring, n-butyraldehyde was added so that the concentration was 10 mol%. Then, when n-butyraldehyde was added so that the concentration was 60 mol%, a white particulate polyvinyl butyral resin was precipitated. Ten minutes after precipitation, 30% hydrochloric acid was added so that the hydrochloric acid concentration was 1.8% by mass, the temperature was then increased to 53°C, and the mixture was aged at the aging temperature of 53°C for 2 hours.

Next, the solution was cooled and neutralized, and then the polyvinyl butyral resin was washed with water and dried to obtain resin 1 (polyvinyl butyral resin, amount of hydroxyl groups 30.8 mol%, degree of acetalization 68.4 mol%, degree of acetylation 0.8 mol%, calculated degree of polymerization 1700).

(Resin 2)

Resin 2 (polyvinyl butyral resin, amount of hydroxyl groups 30.6 mol%, degree of acetalization 68.5 mol%, degree of acetylation 0.8 mol%, calculated degree of polymerization 1500) was obtained in the same manner as resin 1, except that 180 g of polyvinyl alcohol A (average degree of polymerization 1700, degree of saponification 99 mol%) and 20 g of polyvinyl alcohol B (average degree of polymerization 500, degree of saponification 99 mol%) were blended instead of 200 g of polyvinyl alcohol A (average degree of polymerization 1700, degree of saponification 99 mol%).

(Resin 3)

Resin 3 (polyvinyl butyral resin, amount of hydroxyl groups 31.4 mol%, degree of acetalization 67.7 mol%, degree of acetylation 0.9 mol%, calculated degree of polymerization 1350) was obtained in the same manner as resin 1, except that 160 g of polyvinyl alcohol A (average degree of polymerization 1700, degree of saponification 99 mol%) and 40 g of polyvinyl alcohol B (average degree of polymerization 500, degree of saponification 99 mol%) were blended instead of 200 g of polyvinyl alcohol A (average degree of polymerization 1700, degree of saponification 99 mol%).

(Resin 4)

Resin 4 (polyvinyl butyral resin, amount of hydroxyl groups 30.4 mol%, degree of acetalization 68.8 mol%, degree of acetylation 0.8 mol%, calculated degree of polymerization 1150) was obtained in the same manner as resin 1, except that 140 g of polyvinyl alcohol A (average degree of polymerization 1700, degree of saponification 99 mol%) and 60 g of polyvinyl alcohol B (average degree of polymerization 500, degree of saponification 99 mol%) were blended instead of 200 g of polyvinyl alcohol A (average degree of polymerization 1700, degree of saponification 99 mol%).

(Resin 5)

Resin 5 (polyvinyl butyral resin, amount of hydroxyl groups 30.4 mol%, degree of acetalization 68.8 mol%, degree of acetylation 0.8 mol%, calculated degree of polymerization 1700) was obtained in the same manner as resin 1, except that the mixture was aged at an aging temperature of 63°C for 2 hours instead of the aging temperature of 53°C for 2 hours.

(Resin 6)

Resin 6 (polyvinyl butyral resin, amount of hydroxyl groups 30.3 mol%, degree of acetalization 68.8 mol%, degree of acetylation 0.9 mol%, calculated degree of polymerization 850) was obtained in the same manner as resin 1, except that 50 g of polyvinyl alcohol A (average degree of polymerization 1700, degree of saponification 99 mol%) and 150 g of polyvinyl alcohol B (average degree of polymerization 500, degree of saponification 99 mol%) were blended instead of 200 g of polyvinyl alcohol A (average degree of polymerization 1700, degree of saponification 99 mol%), and the mixture was aged at an aging temperature of 47°C for 2 hours instead of the aging temperature of 53°C for 2 hours.

The plasticizer used in the Examples and Comparative Examples is as follows.

3GO: Triethylene glycol-di-2-ethylhexanoate

(Example 1)

A resin composition was obtained by mixing 40 parts by mass of a plasticizer (triethylene glycol-di-2-ethylhexanoate: 3GO) with 100 parts by mass of resin 1. A thermoplastic resin film having a film thickness of 800 $\mu$m was produced from the obtained resin composition using a hydraulic press and a spacer having a thickness of 800 $\mu$m. In addition, two sheets of 2.5 mm clear glass were prepared.

Next, the thermoplastic resin film was laid on one of the sheets of clear glass, and the other sheet of clear glass was further laid on the thermoplastic resin film to obtain a laminated body. The obtained laminated body was placed in a rubber pack, which is a vacuum pack, and degassed for 5 minutes at a vacuum level of a pressure of 0.09 MPa. Next, the still-degassed laminated body was heated to 90°C at a heating rate of 1°C/min, held at 90°C for 30 minutes to perform main compression bonding, and the temperature was then reduced to 30°C. Next, the pressure was returned to normal to obtain the optical laminated body of Example 1.

(Examples 2 to 5 and Comparative Examples 1 to 7)

Examples 2 to 5 and Comparative Examples 1 to 7 were performed in the same manner as Example 1, except that the amount and type of resin used and the amount of plasticizer were changed as shown in Table 1.

Table 1

| | | | | Example 1 | Example 2 | Example 3 | Example 4 | Example 5 | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|---|---|---|---|---|
| Composition | Thermoplastic resin 1 | Type | - | resin 1 | resin 1 | resin 2 | resin 3 | resin 4 | resin 5 | resin 5 | resin 5 | resin 5 | resin 5 | resin 5 | resin 5 |
| | | Calculated degree of polymerization | | 1700 | 1700 | 1500 | 1350 | 1150 | 1700 | 1700 | 1700 | 1700 | 1700 | 1700 | 1700 |
| | | Parts by mass | phr | 100 | 100 | 100 | 100 | 100 | 100 | 75 | 60 | 50 | 50 | 40 | 25 |
| | Thermoplastic resin 2 | Type | - | - | - | - | - | - | - | resin 6 | resin 6 | resin 6 | resin 6 | resin 6 | resin 6 |
| | | Calculated degree of polymerization | - | - | - | - | - | - | - | 850 | 850 | 850 | 850 | 850 | 850 |
| | | Parts by mass | phr | - | - | - | - | - | - | 25 | 40 | 50 | 50 | 60 | 75 |
| | Plasticizer | Type | - | 3GO | 3GO | 3GO | 3GO | 3GO | 3GO | 3GO | 3GO | 3GO | 3GO | 3GO | 3GO |
| | | Parts by mass | phr | 40 | 35 | 40 | 40 | 40 | 40 | 40 | 30 | 40 | 30 | 30 | 40 |
| Physical properties | Amount of change in thickness in compressive creep test | | $\mu_m$ | 120 | 90 | 170 | 215 | 436 | 40 | 71 | 74 | 193 | 57 | 68 | 358 |
| | Storage modulus | 90 | $\times 10^5 Pa$ | 2.55 | 3.4 | 1.9 | 1.65 | 1.42 | 2.55 | 1.65 | 2.3 | 1.3 | 2.3 | 2.3 | 0.96 |
| | Complex viscosity | 200°C | Pa·s | 5877 | 7265 | 4348 | 3495 | 2344 | 5885 | 3494 | 3631 | 1982 | 3728 | 3716 | 1991 |
| Evaluation | Film form ability of resin film | | - | A | B | B | B | B | A | B | B | C | B | B | C |
| | Formation of air bubbles at periphery | | - | A | A | A | B | B | A | B | A | C | A | A | C |
| | Residual air after bonding | | - | A | B | A | A | A | C | C | C | B | C | C | B |

24

EP 4 631 923 A1

(Examples 6 to 8)

Examples 6 to 8 were performed in the same manner as in Example 1, except that the amount and type of resin used and the amount of plasticizer were changed to as shown in Table 2, and the following pigments were included.

Example 6:

| | |
|---|---|
| Phthalocyanine pigment (P.B.15-1): resin layer | In an amount of 0.0142% by mass in the obtained |
| Perylene pigment (P.R.149): resin layer | In an amount of 0.0030% by mass in the obtained |
| Phthalocyanine pigment (P.G.7): resin layer | In an amount of 0.0015% by mass in the obtained |
| Carbon black pigment (P.Bk.7): resin layer | In an amount of 0.0300% by mass in the obtained |

Example 7:
| | |
|---|---|
| Phthalocyanine pigment (P.B.15-1): resin layer | In an amount of 0.0148% by mass in the obtained |
| Perylene pigment (P.R.149): resin layer | In an amount of 0.0054% by mass in the obtained |
| Phthalocyanine pigment (P.G.7): resin layer | In an amount of 0.0060% by mass in the obtained |
| Carbon black pigment (P.Bk.7): resin layer | In an amount of 0.0280% by mass in the obtained |

Example 8:
| | |
|---|---|
| Phthalocyanine pigment (P.B.15-1): resin layer | In an amount of 0.0159% by mass in the obtained |
| Perylene pigment (P.R.149): resin layer | In an amount of 0.0062% by mass in the obtained |
| Phthalocyanine pigment (P.G.7): resin layer | In an amount of 0.0020% by mass in the obtained |
| Carbon black pigment (P.Bk.7): resin layer | In an amount of 0.0160% by mass in the obtained |

Table 2

| | | | | Example 6 | Example 7 | Example 8 |
|---|---|---|---|---|---|---|
| Composition | Thermoplastic resin 1 | Type | - | resin 1 | resin 2 | resin 3 |
| | | Calculated degree of polymerization | | 1700 | 1700 | 1700 |
| | | Parts by mass | phr | 100 | 100 | 100 |
| | Thermoplastic resin 2 | Type | - | - | - | - |
| | | Calculated degree of polymerization | - | - | - | - |
| | | Parts by mass | phr | - | - | - |
| | Colorant | Type | - | P.B.15-1 | P.B.15-1 | P.B.15-1 |
| | | Content | wt% | 0.0142 | 0.0148 | 0.0159 |
| | | Type | - | P.R.149 | P.R.149 | P.R.149 |
| | | Content | wt% | 0.0030 | 0.0054 | 0.0062 |
| | | Type | - | P.G.7 | P.G.7 | P.G.7 |
| | | Content | wt% | 0.0015 | 0.0060 | 0.0020 |
| | | Type | - | P.Bk.7 | P.Bk.7 | P.Bk.7 |
| | | Content | wt% | 0.0300 | 0.0280 | 0.0160 |
| | Plasticizer | Type | - | 3GO | 4GO | 5GO |
| | | Parts by mass | phr | 40 | 40 | 40 |

(continued)

| | | | | Example 6 | Example 7 | Example 8 |
|---|---|---|---|---|---|---|
| Physical properties | Amount of change in thickness in compressive creep test | | $\mu_m$ | 120 | 120 | 120 |
| | Storage modulus | 90 | $\times 10^5$ Pa | 2.55 | 2.55 | 2.55 |
| | Complex viscosity | 200°C | Pa·s | 5877 | 5877 | 5877 |
| Evaluation | Film formability of resin film | | - | A | A | A |
| | Formation of air bubbles at periphery | | - | A | A | A |
| | Residual air after bonding | | - | A | A | A |

The optical laminated body of each of Examples 1 to 8 was produced using a thermoplastic resin film that had an amount of change in thickness of 80 $\mu$m or more when compressed according to the compressive creep test and a storage modulus at 90°C of $1.4 \times 10^5$ Pa or more. As a result, even though the bonding conditions were a low temperature and a low pressure, there was little residual air during bonding, and the optical laminated body had high transparency. Further, the formation of air bubbles at a peripheral portion of the thermoplastic resin film hardly occurred. In addition, the film formability of the thermoplastic resin film was good.

On the other hand, in the optical laminated bodies of Comparative Examples 1 to 3, 5 and 6, because the amount of change in thickness was less than 80 $\mu$m when the thermoplastic resin film used was compressed according to the compressive creep test, a lot of air remained during bonding. As a result, the transparency of the optical laminated body was poor. Further, in the optical laminated bodies of Comparative Examples 4 and 7, because the storage modulus of the thermoplastic resin film used at 90°C was less than $1.4 \times 10^5$ Pa, a lot of air bubbles were formed at the peripheral portion of the thermoplastic resin film. Moreover, it was difficult to produce the thermoplastic resin films by extrusion molding.

Reference Signs List

1A, 2B      optical laminated body
10          thermoplastic resin film (thermoplastic resin layer (A))
20          first transparent material substrate
30          second transparent material substrate
40          functional layer
50          laminated body

**Claims**

1. A thermoplastic resin film comprising a single-layer structure or a multilayer structure, wherein

   the thermoplastic resin film comprises at least a thermoplastic resin layer (A) comprising a thermoplastic resin, in a case where the thermoplastic resin film has a multilayer structure, at least one outermost layer is the thermoplastic resin layer (A),
   the thermoplastic resin layer (A) has an amount of change in thickness of 80 $\mu$m or more when compressed according to a compressive creep test conducted under the conditions described below, and
   the thermoplastic resin layer (A) has a storage modulus at 90°C of $1.4 \times 10^5$ Pa or more. (Compressive creep test conditions)
   A test sample having a diameter of 8 mm and a thickness of 700 to 900 $\mu$m produced from the thermoplastic resin layer (A) is compressed for 30 minutes under a load of 410 g and a temperature of 30°C, a thickness (T1) of the test sample is then measured, the temperature is then increased from 30°C to 90°C at a heating rate of 6°C/min while maintaining the load of 410 g, the test sample is compressed for 5 minutes under the load of 410 g and temperature of 90°C, a thickness (T2) of the test sample A is then measured, and an absolute value of a difference between the thickness (T1) and the thickness (T2) of the test sample is taken as the amount of change in thickness.

2. The thermoplastic resin film according to claim 1, wherein the thermoplastic resin layer (A) has a complex viscosity at 200°C of 2000 Pa·s or more.

3. The thermoplastic resin film according to claim 1 or 2, wherein the thermoplastic resin layer (A) comprises a polyvinyl acetal resin and a plasticizer.

4. The thermoplastic resin film according to claim 3, wherein the plasticizer has a content of 30 parts by mass or more and 50 parts by mass or less with respect to 100 parts by mass of the polyvinyl acetal resin.

5. The thermoplastic resin film according to claim 3 or 4, wherein the plasticizer is at least one plasticizer selected from the group consisting of triethylene glycol-di-2-ethylhexanoate (3GO), polypropylene glycol (PPG), and polyoxypropylene diglyceryl ether (DGP).

6. A laminated body comprising:

   the thermoplastic resin film according to any one of claims 1 to 5; and
   a functional layer different from the thermoplastic resin film.

7. An optical laminated body comprising:

   a first transparent material substrate;
   a second transparent material substrate; and
   the thermoplastic resin film according to any one of claims 1 to 5 arranged between the first and second transparent material substrates.

8. An optical laminated body comprising:

   a first transparent material substrate;
   a second transparent material substrate; and
   the laminated body according to claim 6 or 7 arranged between the first and second transparent material substrates.

Fig. 1

1A

20
10
30

Fig. 2

1B

20
10
40    } 50
10
30

## INTERNATIONAL SEARCH REPORT

| International application No. |
|---|
| **PCT/JP2023/043345** |

| A. | CLASSIFICATION OF SUBJECT MATTER |
|---|---|

*C03C 27/12*(2006.01)i; *B32B 7/12*(2006.01)i; *B32B 27/00*(2006.01)i; *B32B 27/22*(2006.01)i; *B32B 27/28*(2006.01)i; *B32B 27/30*(2006.01)i; *B60J 1/00*(2006.01)i
FI:    C03C27/12 D; B32B7/12; B32B27/00 B; B32B27/22; B32B27/28 101; B32B27/30 102; B60J1/00 H; C03C27/12 N

According to International Patent Classification (IPC) or to both national classification and IPC

| B. | FIELDS SEARCHED |
|---|---|

Minimum documentation searched (classification system followed by classification symbols)

C03C27/12; B32B1/00-43/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2021/117596 A1 (SEKISUI CHEMICAL CO., LTD.) 17 June 2021 (2021-06-17) claims, paragraphs [0005]-[0008], [0054], [0158], examples | 1-8 |
| A | WO 2015/108119 A1 (SEKISUI CHEMICAL CO., LTD.) 23 July 2015 (2015-07-23) paragraphs [0001], [0044] | 1-8 |

☐ Further documents are listed in the continuation of Box C.    ☑ See patent family annex.

| | |
|---|---|
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "D"    document cited by the applicant in the international application | "X"    document of particular relevance; the claimed invention cannot be considered novel or cannot be considered to involve an inventive step when the document is taken alone |
| "E"    earlier application or patent but published on or after the international filing date | |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **06 February 2024** | **20 February 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2023/043345**

| Patent document cited in search report | Publication date (day/month/year) | Patent family member(s) | Publication date (day/month/year) |
|---|---|---|---|
| WO 2021/117596 A1 | 17 June 2021 | EP 4074669 A1<br>claims, paragraphs [0005]-[0008], [0054], [0157], examples<br>US 2023/0011574 A1<br>CN 114787098 A<br>KR 10-2022-0110725 A | |
| WO 2015/108119 A1 | 23 July 2015 | EP 3095767 A1<br>paragraphs [0001], [0045]<br>US 2016/0311199 A1<br>CN 105658595 A<br>KR 10-2016-0108295 A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021117596 A1

- WO 2019066042 A1